# EUROPEAN PATENT SPECIFICATION

(11) **EP 1 591 428 B1**
(45) Date of publication and mention of the grant of the patent: **11.09.2013**
(21) Application number: 03780961.3
(22) Date of filing: 19.12.2003
(51) Int. Cl.: C04B 35/64, C04B 35/195, C04B 38/00

(54) **METHOD OF BAKING CERAMIC HONEYCOMB STRUCTURE**
VERFAHREN ZUM BRENNEN EINER KERAMIKWABENSTRUKTUR
PROCEDE DE CUISSON D'UNE STRUCTURE EN NID D'ABEILLE DE CERAMIQUE

(30) Priority: 07.01.2003 JP 2003001112
(43) Date of publication of application: 02.11.2005
(73) Proprietor: NGK Insulators, Ltd., Nagoya-City, Aichi Pref. 467-8530 (JP)
(72) Inventor: NAKAMURA, Tomoo; c/o NGK INSULATORS, LTD., Nagoya-shi, Aichi 467-8530 (JP); NOGUCHI, Yasushi; c/o NGK INSULATORS, LTD., Nagoya-shi, Aichi 467-8530 (JP)
(74) Representative: Paget, Hugh Charles Edward
(86) International application number: PCT/JP2003/016391
(87) International publication number: WO 2004/060830

(56) References cited:
- EP-A- 0 335 735
- EP-A- 1 736 455
- WO-A-99/18047
- JP-A- 2002 160 976
- JP-A- 2002 326 881
- JP-A- 2003 212 672
- US-A- 5 183 609
- US-A- 5 183 609
- US-A- 5 256 347
- US-A- 5 938 992
- US-A- 6 027 684
- US-A1- 2003 041 574
- US-A1- 2003 143 370

## Description

### Technical Field

The present invention relates to a method for firing of ceramic honeycomb structure, which comprises firing a formed honeycomb material to obtain a ceramic honeycomb structure, particularly to a method for firing of ceramic honeycomb structure, which, when a large-sized formed honeycomb material having an apparent volume of 5 liters or more is fired, can effectively prevent firing defects such as cracks and the like and further can shorten the conventional firing time strikingly.

### Background Art

In various fields of chemistry, electric power, steel, industrial waste disposal, etc., ceramic honeycomb structures superior in heat resistance and corrosion resistance are in use as a dust-collecting filter for purposes such as environmental protection (e.g. pollution control), product recovery from high-temperature gas, and the like. For example, a diesel particulate filter (DPF) for capture of particulates emitted from a diesel engine is used under severe conditions of high-temperature, corrosive gas atmosphere; therefore, as the DPF, there is being used a ceramic honeycomb structure preferably.

In particular, a ceramic honeycomb structure of low pressure loss and high porosity has been required in recent years in order to allow the dust-collecting filter to have a higher treatment capability. For production of such a ceramic honeycomb structure of high porosity, there is disclosed, in, for example, JP-A-2002-219319, a process for production of porous honeycomb filter, which comprises kneading a raw material for aggregate particles (e.g. a raw material to become cordierite), water, a binder (an organic binder such as methyl cellulose or the like), a hole-making agent (an organic substance such as graphite or the like), etc. to form a plastic puddle, forming the plastic puddle to obtain a formed material, and drying and firing the formed material.

In such a process for producing a honeycomb structure using a binder, however, there has been a problem that, during the firing of the formed material, there appear firing defects such as crack and the like. The reason for the problem is considered to be that, during the firing of the formed material, a large temperature difference arises between the central portion of the formed material where a sharp temperature rise appears owing to the burning of the binder contained in the formed material and the peripheral portion of the formed material where a temperature change takes place so as to approximately follow the temperature of the firing atmosphere and, as a result, a thermal stress generates inside the formed material. Hence, there was taken, as seen in, for example, JP-A-1-249665, a countermeasure of employing a minimum temperature elevation rate (i.e. slow heating) in a temperature range (ordinarily, 180 to 300°C) in which the binder contained in the formed material burns and, thereby, enabling slow burning of the binder and conducting firing so that there arises no temperature difference between the central portion of the formed material and the peripheral portion of the formed material.

Firing defects such as crack and the like can be prevented when a countermeasure such as mentioned above is taken. However, there has been a problem that the firing time is longer. A longer firing time is not preferred from the standpoints of energy consumed and productivity.

US-5256347 describes production of fired cordierite honeycombs in which the mean temperature rise rate is 50, 60 or 70°C/how.

### Disclosure of the Invention

The present invention has been made in view of the above problems and aims at providing a method for firing of ceramic honeycomb structure, which has advantages of being able to prevent firing defects such as crack and the like effectively and further to shorten the conventional firing time strikingly.

The present invention provides the method for firing of a ceramic honeycomb structure set out in claim 1.

Preferably, when the formed honeycomb material obtained has a partition wall thickness of 90 µm or more, the heating of the firing atmosphere from 800°C to 1,000°C in the firing of the formed honeycomb material is conducted at such a temperature elevation rate that the difference of the temperature of the central portion of the formed honeycomb material from the temperature of the firing atmosphere is kept in a range of -60°C to +60°C. Preferably, when the formed honeycomb material obtained has a partition wall thickness of less than 90 µm, the heating of the firing atmosphere from 800°C to 1,000°C in the firing of the formed honeycomb material is conducted at such a temperature elevation rate that the difference of the temperature of the central portion of the formed honeycomb material from the temperature of the firing atmosphere is kept in a range of -40°C to +40°C.

### Brief Description of the Drawings

Fig. 1 is a graph showing a relation between the time of firing, the temperature of central portion of formed honeycomb material, and the temperature of firing atmosphere when a formed honeycomb material has been fired at a given temperature elevation rate.
Fig. 2 is a graph showing relations between the time of firing, the temperature of central portion of formed honeycomb material, and the temperature of firing atmosphere when formed honeycomb materials have been fired at given temperature elevation rates.
Fig. 3 is a schematic drawing explaining a "honeycomb shape" in the case of honeycomb structure.
Fig. 4(a) to Fig. 4(c) are drawings showing the steps of the method for determining the temperature elevation rate of firing atmosphere.

### Best Mode for Carrying Out the Invention

In developing the method of the present invention for firing of ceramic honeycomb structure, the present inventor first made a study on the influence, in firing a formed honeycomb material (hereinafter referred simply to as "formed material") in a firing atmosphere, of the temperature elevation rate of the firing atmosphere in a temperature range at which the binder contained in the formed material burns, on the generation of firing defects such as cracks and the like in the formed material.

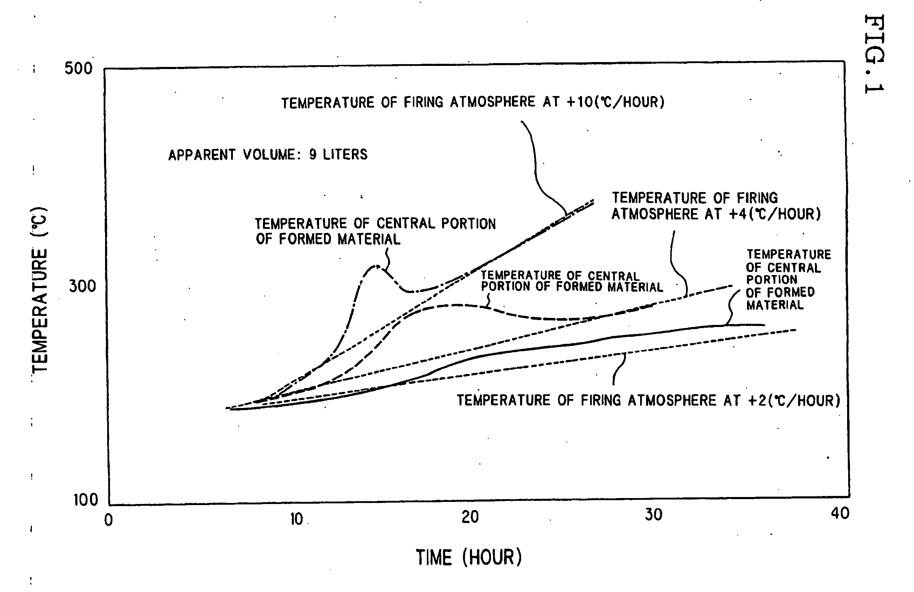

To begin with, the graph shown in Fig. 1 indicates changes with time, of the temperature of the central portion of formed material and the temperature of the firing atmosphere (this is roughly equal to the temperature of the peripheral portion of formed material) when a formed material having a given apparent volume has been fired at different temperature elevation rates. It is appreciated from this graph that as the temperature elevation rate in the temperature range of binder burning is larger, the binder contained in the formed material burns rapidly and, as a result, the difference between the temperature of the central portion of formed material and the temperature of the peripheral portion of formed material (i.e. the temperature of the firing atmosphere) is larger.

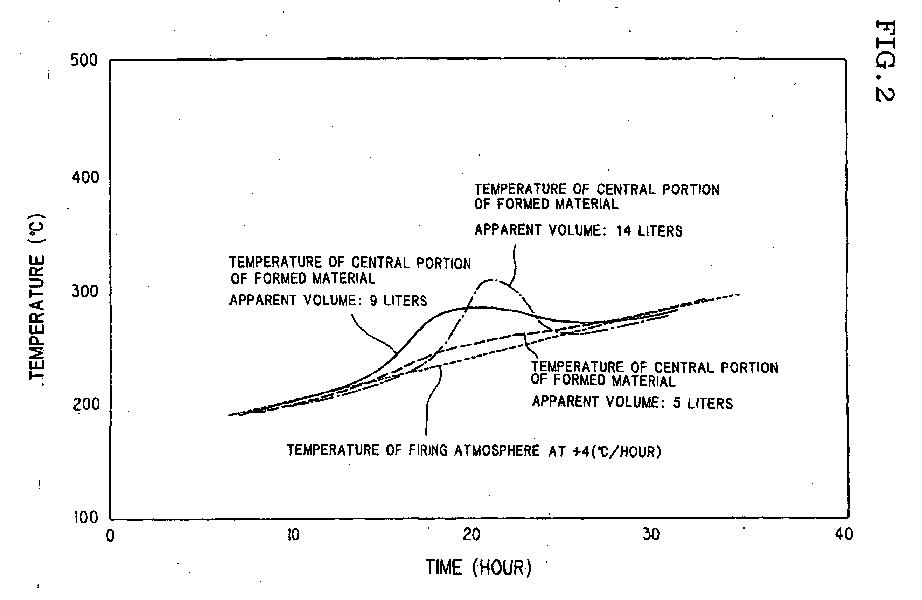

The graph shown in Fig. 2 indicates changes with time, of the temperature of the central portion of formed material and the temperature of the firing atmosphere (this is roughly equal to the temperature of the peripheral portion of formed material) when formed materials having different apparent volumes have been fired at a given temperature elevation rate. It is appreciated from this graph that as the apparent volume of formed material is larger, the absolute amount of the binder contained in the formed material is larger and the binder burns rapidly and, as a result, the difference between the temperature of the central portion of formed material and the temperature of the peripheral portion of formed material (i.e. the temperature of firing atmosphere) is larger. Therefore, it is easily anticipated that the above-mentioned phenomenon that as the temperature elevation rate in the temperature range of binder burning is larger, the difference between the temperature of the central portion of formed material and the temperature of the peripheral portion of formed material is larger, is more striking as the apparent volume of formed material is larger.

It may be thought from the above findings that the only way to prevent the generation of firing defects such as crack and the like is to minimize the temperature elevation rate in the temperature range of binder burning as shown in the above-mentioned Patent Literature 2 [employ +2 to +4 (°C/hr) in the case of Fig. 1] to allow the burning of binder to proceed mildly and conduct firing so that there arises no temperature difference between the central portion of formed material and the peripheral portion of formed material.

However, a study by the present inventor revealed that by making extremely large the temperature elevation rate of the firing atmosphere in the temperature range of binder burning so that the temperature change of the firing atmosphere can follow the rapid temperature increase of the central portion of formed material caused by the burning of binder, the temperature difference between the central portion of formed material and the peripheral portion of formed material can be made small unexpectedly and thus the generation of firing defects such as crack and the like can be prevented.

Hence, it is proposed that, in firing a formed honeycomb material in a firing atmosphere, the heating of the firing atmosphere from a temperature (180 to 300°C) at which the organic binder contained in the formed honeycomb material begins to burn, to 300°C is conducted at a temperature elevation rate of +25 (°C/hr) or more and also at such a temperature elevation rate that the difference of the temperature of the central portion of the formed honeycomb material from the temperature of the firing atmosphere is kept in a given temperature range.

By doing so, the temperature difference between the central portion of formed material and the peripheral portion of formed material can be made small; as a result, the generation of firing defects such as crack and the like can be prevented effectively, and the temperature elevation rate in the temperature range of binder burning can be increased strikingly and the conventional firing time can be shortened strikingly.

The modes for carrying out the methods of the present invention for firing of ceramic honeycomb structure are specifically described below.

### (1) Application target of the invention

To begin with, description is made on the formed honeycomb material which is the application target of the firing method of the present invention. The "formed honeycomb material" which is the application target of the firing method of the present invention, is a so-called non-fired honeycomb structure and is obtained by mixing and kneading a raw material for aggregate particles, water and an organic binder to form a puddle, forming this puddle into a honeycomb shape and drying the honeycomb shape.

The aggregate particles are particles which become the main component of a ceramic honeycomb structure (sintered material) to be obtained, and the raw material for aggregate particles is a substance which is the raw material for aggregate particles. The raw material for aggregate particles is not particularly restricted, but there can be mentioned, for example, a raw material to become cordierite, mullite, alumina, aluminum titanate, lithium aluminum silicate, silicon carbide and silicon nitride.

Incidentally, the raw material to become cordierite means a substance which is converted into cordierite upon firing, and there can be mentioned, for example, a mixture of talc, kaolin, alumina, silica, etc. wherein they are mixed so as to give, after firing, a theoretical composition (2MgO·2Al₂O₃·5SiO₂) of cordierite. Specifically, there can be used suitably a mixture of talc, kaolin, alumina, silica, etc. wherein they are mixed so as to give, after firing, a composition of SiO₂ = 42 to 56% by mass, Al₂O₃ = 30 to 45% by mass and MgO = 12 to 16% by mass.

The organic binder is an additive which becomes a gel in the formed material before firing (i.e. puddle) and functions as a reinforcing agent for maintenance of the mechanical strength of formed material. Therefore, as the organic binder, there can be suitably used organic high-molecular substances which can gel in the formed material (puddle), such as hydroxypropyl methyl cellulose, methyl cellulose, hydroxyethyl cellulose, carboxymethyl cellulose, polyvinyl alcohol and the like.

Incidentally, the puddle ordinarily contains the above-mentioned raw material for aggregate particles, water and the above-mentioned organic binder; however, it may as necessary contain other additives, for example, a hole-making agent and a dispersing agent.

The hole-making agent is an additive which burns and forms pores when the formed material is fired, thereby increases the porosity of the formed material and gives a porous honeycomb structure of high porosity. Therefore, as the hole-making agent, there can be mentioned organic substances which burn and disappear when the formed material is fired, such as carbon (e.g. graphite), wheat flour, starch, phenolic resin, poly(methyl methacrylate), polyethylene, polyethylene terephthalate and the like. Of these, a micro-capsule made of a foamed resin (e.g. an acrylic resin-based micro-capsule) can be used particularly preferably. Being hollow, the micro-capsule made of a foamed resin has advantages of being able to give a porous honeycomb structure of high porosity with addition of a small amount and, moreover, of being low in the generation of heat during firing and being able to reduce the generation of thermal stress.

The dispersing agent is an additive for promoting the dispersion of raw material for aggregate particles in water (dispersing medium). As the dispersing medium, there can be used, for example, ethylene glycol, dextrin, fatty acid soap and polyalcohol.

The raw material for aggregate particles, water, organic binder, etc. are mixed and kneaded by, for example, a vacuum pug mill and can be made into a puddle having an appropriate viscosity. The puddle is formed into a honeycomb shape and the honeycomb shape is dried to obtain a formed honeycomb material.

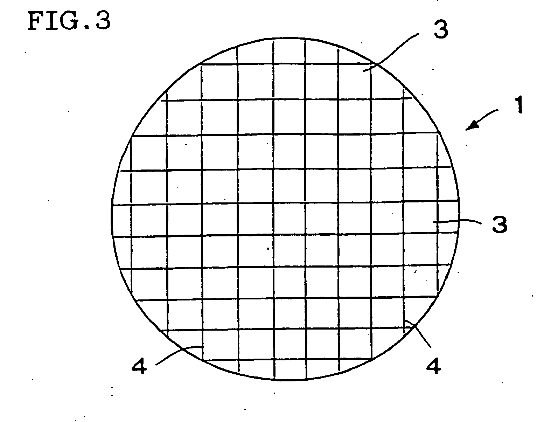

The "honeycomb shape" referred to in this specification means a shape such as shown in the honeycomb structure 1 of Fig. 3, i.e. a shape in which a plurality of cells 3 to become passages for fluid are formed by being divided by extremely thin partition walls 4. The overall shape of the formed honeycomb material is not particularly restricted and there can be mentioned, for example, a cylinder shown in Fig. 3, a tetragonal prism and a triangular prism. There is no particular restriction, either, as to the cell shape of the formed honeycomb material (the cell shape in a section normal to the direction of cell formation) and there can be mentioned, for example, a tetragonal cell shown in Fig. 3, a hexagonal cell and a triangular cell.

The forming can be conducted by a known conventional forming method such as extrusion forming, injection forming, press forming or the like. Of these, there can be preferably used extrusion forming wherein a puddle prepared as above is extrusion-formed using a die having a desired cell shape, a desired partition wall thickness and a desired cell density. Also, the drying can be conducted by a known conventional drying method such as hot-air drying, micro-wave drying, dielectric drying, reduced-pressure drying, vacuum drying, freeze-drying or the like. Of these, there is preferred a combined drying method of hot-air drying and micro-wave drying or dielectric drying because it can dry the whole portion of the formed honeycomb material rapidly and uniformly.

Incidentally, in the present firing method, a large-sized formed honeycomb material having an apparent volume of 5 liters or more is an application target. Such a large-sized formed honeycomb material which contains a large absolute amount of an organic binder, is characterized in that the temperature increase in its central portion is sharp owing to the burning of the organic binder and further in that the heat generated in the formed material is hardly dissipated outside the formed material. Therefore, in the large-sized formed honeycomb material, the temperature difference between the central portion of formed material and the peripheral portion of formed material tends to be larger than in small-sized formed honeycomb materials; generation of firing defects such crack and the like is very striking; and the meritorious effects of the present firing method appear at a higher level.

Incidentally, the "apparent volume" referred to in this specification means a volume containing even the cell spaces of formed honeycomb material. For example, a honeycomb structure having an outer diameter of 250 mm and a length of 300 mm has an apparent volume of 15 liters regardless of its cell structure.

### (2) First method (firing in temperature range of binder burning)

The firing method here described comprises firing the above-mentioned formed honeycomb material in a firing atmosphere which is heated at a given temperature elevation rate, to obtain a ceramic honeycomb structure. The heating of the firing atmosphere in the temperature range (180 to 300°C) of binder burning is conducted at a controlled temperature elevation rate.

As described previously, the generation of firing defects such as crack and the like, taking place during the firing of formed material is caused by the large temperature difference between the central portion of formed material where a sharp temperature increase takes place owing to the burning of the binder contained in the formed material and the peripheral portion of formed material whose temperature change approximately follows the temperature change of the firing atmosphere. Therefore, the heating of the firing atmosphere in the temperature range of binder burning is conducted at an extremely high temperature elevation rate so that the temperature increase of the firing atmosphere follows the sharp temperature increase of the central portion of formed material brought about by the burning of binder. Specifically, the heating of the firing atmosphere from a temperature (180 to 300°C) at which the organic binder contained in the formed honeycomb material begins to burn, to 300°C is conducted at a temperature elevation rate of +25 (°C/hr) or more.

In this firing method, the heating of the firing atmosphere is conducted at a controlled temperature elevation rate in a temperature range from the temperature at which the organic binder contained in the formed honeycomb material begins to burn (the starting temperature of binder burning), to 300°C. The reason why the starting point of the controlled temperature elevation rate has been selected at the starting temperature of binder burning, is that the sharp temperature increase of the central portion of formed material is initiated by the burning of the organic binder; meanwhile, the reason why the end point of the controlled temperature elevation rate has been selected at 300°C, is that, with ordinary organic binders, the burning is complete up to 300°C. Incidentally, the starting temperature of binder burning is a temperature in a range of 180 to 300°C although it varies depending upon the kind of the organic binder used.

In this firing method, the temperature elevation rate of the firing atmosphere is made extremely high at +25 (°C/hr) or more in order for the firing atmosphere to follow the sharp temperature increase of the central portion of formed material, brought about by the burning of binder. Thereby, firing defects such as crack and the like can be prevented effectively and, moreover, the firing time can be shortened strikingly as compared with the conventional firing time. Although there is a difference depending upon the conditions of formed material such as apparent volume and the like, when the temperature elevation rate of the firing atmosphere is less than +25 (°C/hr), there may be a case in which the temperature of the firing atmosphere (i.e. the temperature of the peripheral portion of formed material) is unable to follow the sharp temperature increase of the central portion of formed material, brought about by the burning of binder, the temperature difference between the central portion of formed material and the peripheral portion of formed material becomes large, and firing defects such as crack and the like generate. Further, when the temperature elevation rate of the firing atmosphere is decreased extremely, the time of firing becomes very long although the firing defects such as crack and the like may be prevented.

As described above, it is necessary to control the temperature elevation rate of the firing atmosphere at +25 (°C/hr) or more in a temperature range from the starting temperature of binder firing to 300°C; and it is further necessary that the temperature elevation rate is such a temperature elevation rate that the difference of the temperature of the central portion of formed material from the temperature of the firing atmosphere is kept in a given temperature range.

This is because, even when the temperature elevation rate of the firing atmosphere is set at +25 (°C/hr) or more, there may be a case that the temperature increase of the firing atmosphere (i.e. the peripheral portion of formed material) is not sufficient and is unable to follow the sharp temperature increase of the central portion of formed material, or, the temperature increase of the firing atmosphere is excessive and exceeds the temperature increase of the central portion of formed material, depending upon various conditions such as the structure of formed material (e.g. apparent volume, partition wall thickness and cell density), the material constituting the formed material (e.g. kind of raw material for aggregate particles, and kind and amount of binder), the oxygen concentration during firing, and the like.

The allowable range of the difference of the temperature of the central portion of formed material from the temperature of the firing atmosphere (i.e. the temperature of the peripheral portion of formed material) varies depending upon the partition wall thickness of the formed material. The reason is that when the partition wall thickness is large, the formed material has high mechanical strengths and therefore hardly generates firing defects such as crack and the like even though the temperature difference between the central portion of formed material and the peripheral portion of formed material is relatively large, while when the partition wall thickness is small, the formed material has low mechanical strengths and therefore firing defects such as crack and the like are unpreventable unless the temperature difference between the central portion of formed material and the peripheral portion of formed material is made small. Specifically, when the formed honeycomb material has a partition wall thickness of 90 µm or more, it is sufficient to employ such a temperature elevation rate (of the firing atmosphere) that the difference of the temperature of the central portion of formed material from the temperature of the firing atmosphere is kept in a range of -80 to +80°C; however, when the formed honeycomb material has a partition wall thickness of less than 90 µm, there is required such a temperature elevation rate that the difference of the temperature of the central portion of formed material from the temperature of the firing atmosphere is kept in a range of -40 to +50°C.

"Such a temperature elevation rate that the difference of the temperature of the central portion of formed material from the temperature of the firing atmosphere is kept in a given temperature range" varies depending upon various conditions such as the structure of formed material (e.g. apparent volume, partition wall thickness and cell density), the material constituting the formed material (e.g. kind of raw material for aggregate particles, and kind and quantity of binder), and the oxygen concentration during firing. However, the temperature elevation rate can be determined by, for example, the method shown below.

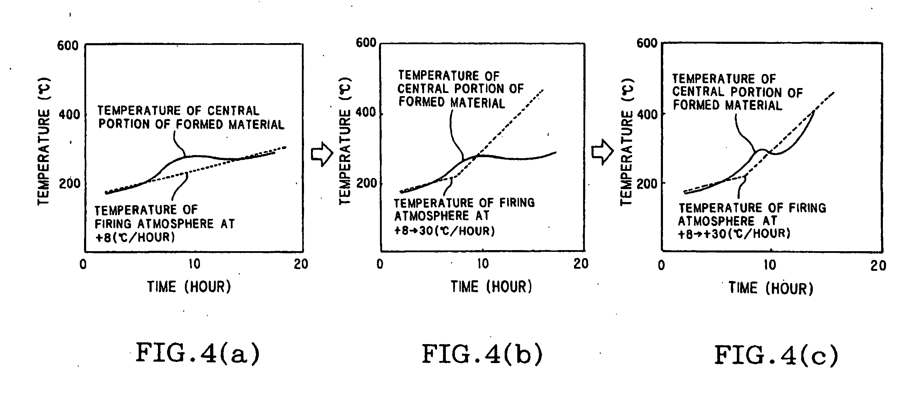

As shown in Fig. 4(a), first, a formed material to be fired actually (a formed material to be tested) is subjected to test firing under the conditions intended to be employed actually, in a firing atmosphere which is heated at a tentative temperature elevation rate [+8 (°C/hr) in the case of Fig. 4(a)]. The temperatures of the central portion of the formed material during the test firing at the tentative temperature elevation rate are measured using a thermocouple or the like and recorded against time to prepare a temperature curve of the central portion.

As is clear from the temperature curve of the central portion, shown in Fig. 4(a), the temperature of the central portion of the formed material increases sharply from the starting temperature of binder burning and the difference of the temperature of the central portion from the temperature of the firing atmosphere reaches the maximum. Hence, as shown in Fig. 4(b), an actual temperature elevation rate of the firing atmosphere [at +30 (°C/hr) in the case of Fig. 4(b)] is determined so as to follow the temperature curve of the central portion. When actual firing is conducted using the thus-determined temperature elevation rate, the difference of the temperature of the central portion of formed material from the temperature of the firing atmosphere is kept in a given temperature range, as shown in Fig. 4(c).

Incidentally, the degree of the burning of the organic binder is affected also by the level of the tentative temperature elevation rate set. Therefore, when the tentative temperature elevation rate has been set inappropriately, there may be a case that the difference of the temperature of the central portion of formed material from the temperature of the firing atmosphere is not kept in a given temperature range. In such a case, the tentative temperature elevation rate is reset, the test firing is conducted again, and the temperature curve of the central portion is prepared again. Based on the newly-obtained temperature curve of the central portion and according to the same manner as above, an actual temperature elevation rate of firing atmosphere can be determined.

### (3) Method of the invention (firing in talc dehydration temperature range)

The firing method according to the invention comprises firing the above-mentioned formed honeycomb material in a firing atmosphere which is heated at a given temperature elevation rate, to obtain a ceramic honeycomb structure, and is characterized particularly in that, when the raw material for aggregate particles is a raw material to become cordierite, the temperature elevation rate of the firing atmosphere in talc dehydration temperature range (800 to 1,000°C) is controlled.

The present inventor made a study on the problem of generation of firing defects such as crack and the like during firing of formed material. As a result, the present inventor found a fact that firing defects such as crack and the like may generate in a temperature range of 800 to 1,000°C, as well as in the above-mentioned temperature range (180 to 300°C) of binder burning.

This generation of firing defects such as crack and the like in a temperature range of 800 to 1,000°C is a phenomenon particular to a case that the raw material for aggregate particles, contained in the formed material is a raw material to become cordierite, and it is caused because, in the temperature range of 800 to 1,000°C, a temperature difference becomes large between the central portion of formed material where a sharp temperature decrease takes place owing to the endothermic reaction brought about by dehydration from talc (a component of the raw material to become cordierite) and the peripheral portion of formed material where a temperature change takes place so as to approximately follow the temperature of the firing atmosphere.

Therefore, in the firing method according to the invention, the temperature elevation rate of the firing atmosphere in a temperature range of 800 to 1,000°C (the temperature range of talc dehydration) is suppressed low at a given level or below (that is, slow firing is conducted) so as to correspond to the sharp temperature decrease of the central portion of formed material, brought about by the endothermic reaction. Specifically, the temperature elevation rate of the firing atmosphere from 800 to 1,000°C is set at +40 (°C/hr) or less.

In the firing method according to the invention, the temperature elevation rate of the firing atmosphere is suppressed low at +40 (°C/hr) or less so as to correspond to the sharp temperature decrease of the central portion of formed material, brought about by the endothermic reaction. Thereby, firing defects such as crack and the like can be prevented effectively. When the temperature elevation rate of the firing atmosphere is controlled above +40 (°C/hr), the temperature of the firing atmosphere (i.e. the temperature of the peripheral portion of formed material) increases although the temperature of the central portion of formed material decreases sharply owing to the endothermic reaction; as a result, the temperature difference between the central portion of formed material and the peripheral portion of formed material becomes large and there may be generation of firing defects such as crack and the like.

As described above, in the firing method according to the invention, it is necessary to control the temperature elevation rate of the firing atmosphere at +40 (°C/hr) or less in a temperature range from 800 to 1,000°C; and it is further necessary that the temperature elevation rate is such a temperature elevation rate that the difference of the temperature of the central portion of formed material from the temperature of the firing atmosphere is kept in a given temperature range.

This is because even when the temperature elevation rate of the firing atmosphere is made at +40 (°C/hr) or less, there may be a case that the temperature increase of the firing atmosphere becomes excessive and is unable to follow the temperature decrease of the central portion of formed material, depending upon various conditions such as the structure of formed material (e.g. apparent volume, partition wall thickness and cell density), the material constituting the formed material (e.g. kind of raw material for aggregate particles, and kind and amount of binder), the oxygen concentration during firing, and the like.

The allowable range of the difference of the temperature of the central portion of formed material from the temperature of the firing atmosphere (i.e. the temperature of the peripheral portion of formed material) varies depending upon the partition wall thickness of the formed material. The reason is that when the partition wall thickness is large, the formed material has high mechanical strengths and therefore hardly generates firing defects such as crack and the like even if the temperature difference between the central portion of formed material and the peripheral portion of formed material is relatively large, while when the partition wall thickness is small, the formed material has low mechanical strengths and therefore firing defects such as crack and the like are unpreventable unless the temperature difference between the central portion of formed material and the peripheral portion of formed material is made small. Specifically, when the formed honeycomb material has a partition wall thickness of 90 µm or more, there is preferred such a temperature elevation rate (of the firing atmosphere) that the difference of the temperature of the central portion of formed material from the temperature of the firing atmosphere is kept in a range of -60 to +60°C; however, when the formed honeycomb material has a partition wall thickness of less than 90 µm, there is preferred such a temperature elevation rate that the difference of the temperature of the central portion of formed material from the temperature of the firing atmosphere is kept in a range of -40 to +40°C.

"Such a temperature elevation rate that the difference of the temperature of the central portion of formed material from the temperature of the firing atmosphere is kept in a given temperature range" varies depending upon various conditions such as the structure of formed material (e.g. apparent volume, partition wall thickness and cell density), the material constituting the formed material (e.g. kind of raw material for aggregate particles, and kind and quantity of binder), and the oxygen concentration during firing. As in the case of the firing method according to the first invention, a formed material to be fired actually (a formed material to be tested) is subjected to test firing under the conditions intended to be employed actually, in a firing atmosphere which is heated at a tentative temperature elevation rate; and the temperatures of the central portion of the formed material during the test firing at the tentative temperature elevation rate are measured using a thermocouple or the like and recorded against time to prepare a temperature curve of the central portion. If the difference of the temperature of the central portion of formed material indicated by the temperature curve of the central portion, from the temperature of the firing atmosphere is kept in a given temperature range, the tentative temperature elevation rate may be employed as an actual temperature elevation rate of firing atmosphere. When actual firing is conducted using the thus-determined temperature elevation rate, the difference of the temperature of the central portion of formed material from the temperature of the firing atmosphere is kept in a given temperature range.

Incidentally, the degree of the endothermic reaction brought about by the dehydration from talc is affected also by the level of the tentative temperature elevation rate set. Therefore, when the tentative temperature elevation rate has been set inappropriately, there may be a case that the difference of the temperature of the central portion of formed material from the temperature of the firing atmosphere is not kept in a given temperature range. In such a case, the tentative temperature elevation rate is reset, the test firing is conducted again, and the temperature curve of the central portion is prepared again. By repeating the above procedure until the difference of the temperature of the central portion of formed material indicated by the temperature curve of the central portion, from the temperature of the firing atmosphere comes to fall in a given temperature range, an actual temperature elevation rate of firing atmosphere can be determined.

### (Examples)

The present invention is described more specifically below by way of Examples. However, the present invention is in no way restricted by these Examples. Incidentally, in the following Examples and Comparative Examples, there was used, as the average particle diameter of the used raw material for aggregate particles, a 50% particle diameter obtained by a measurement using a particle size distribution tester of X-ray transmission type (for example, Sedigraph 5000-02 produced by Shimadzu Corporation) which conducts detection by the X-ray transmission method based on the Stokes' liquid phase sedimentation method.

### [Production of formed honeycomb materials]

### (Formed material A)

As a raw material for aggregate particles, there was prepared a raw material to become cordierite, by mixing 40% by mass of talc (average particle diameter: 10 µm), 35% by mass of kaolin (average particle diameter: 10 µm), 10% by mass of alumina (average particle diameter: 6 µm), 10% by mass of aluminum hydroxide (average particle diameter: 1 µm) and 5% by mass of silica (average particle diameter: 5 µm).

To 100 parts by mass of the raw material for aggregate particles were added 3 parts by mass of methyl cellulose as an organic binder, 0.5 part by mass of potassium laurate as a dispersing agent (a surfactant) and 32 parts by mass of water. Mixing and kneading was conducted using a vacuum pug mill to prepare a puddle.

The puddle was extrusion-formed into a honeycomb shape using a die having the below-mentioned cell shape, partition wall thickness and cell density. The honeycomb shape was dried by a combined drying method of hot-air drying and micro-wave drying to obtain a formed honeycomb material (formed material A). The overall shape of the formed honeycomb material (formed material A) was such that the end face (cell-opening face) shape was a circle having an outer diameter of 196 mm, the length was 182 mm, the cell shape was a square of 1.3 mm x 1.3 mm, the partition wall thickness was 154 µm, the cell density was about 59 cells/cm², the number of total cells was 18,000, and the apparent volume was 5 liters.

### (Formed material B)

As a raw material for aggregate particles, there was prepared a raw material to become cordierite, by mixing 40% by mass of talc (average particle diameter: 7 µm), 19% by mass of kaolin (average particle diameter: 7 µm), 14% by mass of alumina (average particle diameter: 5 µm), 15% by mass of aluminum hydroxide (average particle diameter: 1 µm) and 12% by mass of silica (average particle diameter: 3 µm).

To 100 parts by mass of the raw material for aggregate particles were added 4 parts by mass of methyl cellulose as an organic binder, 0.5 part by mass of potassium laurate as a dispersing agent (a surfactant) and 34 parts by mass of water. Mixing and kneading was conducted using a vacuum pug mill to prepare a puddle.

The puddle was extrusion-formed into a honeycomb shape using a die having the below-mentioned cell shape, partition wall thickness and cell density. The honeycomb shape was dried by a combined drying method of hot-air drying and micro-wave drying to obtain a formed honeycomb material (formed material B). The overall shape of the formed honeycomb material (formed material B) was such that the end face (cell-opening face) shape was a circle having an outer diameter of 277 mm, the length was 157 mm, the cell shape was a square of 1.3 mm x 1.3 mm, the partition wall thickness was 78 µm, the cell density was about 58 cells/cm², the number of total cells was about 35,000, and the apparent volume was 9 liters.

### (Formed material C)

As a raw material for aggregate particles, there was prepared a raw material to become cordierite, by mixing 40% by mass of talc (average particle diameter: 7 µm), 19% by mass of kaolin (average particle diameter: 7 µm), 14% by mass of alumina (average particle diameter: 5 µm), 15% by mass of aluminum hydroxide (average particle diameter: 1 µm) and 12% by mass of silica (average particle diameter: 3 µm).

To 100 parts by mass of the raw material for aggregate particles were added 4 parts by mass of methyl cellulose as an organic binder, 0.5 part by mass of potassium laurate as a dispersing agent (a surfactant) and 34 parts by mass of water. Mixing and kneading was conducted using a vacuum pug mill to prepare a puddle.

The puddle was extrusion-formed into a honeycomb shape using a die having the below-mentioned cell shape, partition wall thickness and cell density. The honeycomb shape was dried by a combined drying method of hot-air drying and micro-wave drying to obtain a formed honeycomb material (formed material C). The overall shape of the formed honeycomb material (formed material C) was such that the end face (cell-opening face) shape was a circle having an outer diameter of 296 mm, the length was 209 mm, the cell shape was a square of 1.3 mm x 1.3 mm, the partition wall thickness was 104 µm, the cell density was about 58 cells/cm², the number of total cells was about 40,000, and the apparent volume was 14 liters.

### (Examples 2-1 to 2-9 and Comparative Examples 2-1 to 2-6)

The formed honeycomb materials (formed materials A to C) were fired each under the conditions shown in Table 1 to investigate the influence of the temperature elevation rate of firing atmosphere in the temperature range (800 to 1,000°C) of talc dehydration, on the defects of firing such as crack and the like and the time of firing. Incidentally, the firing was conducted using a batch type oven.

In Table 2, the temperature elevation rate of firing atmosphere in the temperature range of binder burning was expressed as "180 to 300°C temperature elevation rate"; the maximum temperature difference in the temperature range of binder burning, of the temperature of central portion of formed material from the temperature of firing atmosphere was expressed as "180 to 300°C maximum temperature difference"; the temperature elevation rate of firing atmosphere in the temperature range of talc dehydration was expressed as "800 to 1,000°C temperature elevation rate"; and the maximum temperature difference in the temperature range of talc dehydration, of the temperature of central portion of formed material from the temperature of firing atmosphere was expressed as "800 to 1,000°C maximum temperature difference".

In all of Examples 2-1 to 2-9 and Comparative Examples 2-1 to 2-6, the "180 to 300°C temperature elevation rate" was +4 (°C/hr). The "180 to 300°C maximum temperature difference" was calculated by, in firing any formed material actually, measuring the temperature of the central portion of the formed material and the temperature of the firing atmosphere used, using a R thermocouple. Incidentally, the allowable range of the maximum temperature difference is required to be in a range of -80 to +80°C in the formed materials A and C each having a partition wall thickness of 90 µm or more and in a range of -40 to +50°C in the formed material B having a partition wall thickness of less than 90 µm; and these allowable ranges were satisfied in all of Examples 2-1 to 2-9 and Comparative Examples 2-1 to 2-6.

The "800 to 1,000°C maximum temperature difference" was calculated by, in firing any formed material actually, measuring the temperature of the central portion of the formed material and the temperature of the firing atmosphere used, using a R thermocouple. Incidentally, the allowable range of the maximum temperature difference is preferred to be in a range of -60 to +60°C in the formed materials A and C each having a partition wall thickness of 90 µm or more and in a range of -40 to +40°C in the formed material B having a partition wall thickness of less than 90 µm.

In Table 2, "product yield" indicates the proportion of accepted products free from firing defect (e.g. crack) to total formed materials fired when 20 samples of each of the formed honeycomb materials (formed materials A to C) were fired under the conditions shown in Table 2. "Evaluation of yield" was expressed by ○ when the product yield was 95% or more, by Δ when the product yield was 80% to less than 95%, and by X when the product yield was less than 80%.

In Table 2, "firing time" was defined as a time taken from start of firing to completion of firing, in the firing program set for the batch type oven. In this case, the start of firing was a point at which, after the formed material was placed in the batch type oven, the temperature of firing atmosphere passed 100°C in the temperature elevation step; and the completion of firing was a point at which the temperature of firing atmosphere reached 100°C in the temperature decrease (cooling) step.

**Table 1**

| | Kind of Formed material | 180 to 300°C temperature elevation rate (°C/hr) | 180 to 300°C maximum temperature difference (°C) | 800 to 1000°C temperature elevation rate (°C/hr) | 800 to 1000°C maximum temperature difference (°C) | Product yield (%) | Evaluation of yield | Time of firing (hr) |
|---|---|---|---|---|---|---|---|---|
| Example 2-1 | Formed material A | 4 | 18 | 10 | -27 | 100 | ○ | 106 |
| Example 2-2 | Formed material A | 4 | 17 | 25 | -45 | 100 | ○ | 94 |
| Example 2-3 | Formed material A | 4 | 17 | 40 | -60 | 100 | ○ | 91 |
| Comp. Example 2-1 | Formed material A | 4 | 17 | 60 | -74 | 100 | ○ | 90 |
| Comp. Example 2-2 | Formed material A | 4 | 18 | 90 | -98 | 80 | Δ | 88 |
| Example 2-4 | Formed material B | 4 | 44 | 10 | -14 | 100 | ○ | 106 |
| Example 2-5 | Formed material B | 4 | 45 | 25 | -26 | 100 | ○ | 94 |
| Example 2-6 | Formed material B | 4 | 45 | 40 | -39 | 100 | ○ | 91 |
| Comp. Example 2-3 | Formed material B | 4 | 46 | 60 | -52 | 75 | x | 90 |
| Comp. Example 2-4 | Formed material B | 4 | 45 | 90 | -72 | 0 | x | 88 |
| Example 2-7 | Formed material C | 4 | 68 | 10 | -21 | 100 | ○ | 106 |
| Example 2-8 | Formed material C | 4 | 69 | 25 | -37 | 100 | ○ | 94 |
| Example 2-9 | Formed material C | 4 | 68 | 40 | -49 | 100 | ○ | 91 |
| Comp. Example 2-5 | Formed material C | 4 | 68 | 60 | -66 | 90 | Δ | 90 |
| Comp. Example 2-6 | Formed material C | 4 | 67 | 90 | -87 | 0 | x | 88 |

### (Evaluation)

In each of Examples 2-1 to 2-9, the 800 to 1,000°C temperature elevation rate was +40 (°C/hr) or less and the 800 to 1,000°C maximum temperature difference was in the predetermined range; therefore, there was no firing defect such as crack or the like and the product yield was good. In each of Comparative Examples 2-1 to 2-6, the 800 to 1,000°C temperature elevation rate exceeded +40 (°C/hr) and consequently the 800 to 1,000°C maximum temperature difference was not in the predetermined range; therefore, there were firing defects such as crack and the like and the product yield was low.

Incidentally, in Comparative Example 2-1, although the 800 to 1,000°C temperature elevation rate exceeded +40 (°C/hr), there was no firing defect such as crack or the like and the product yield was good, under the conditions used. However, since the 800 to 1,000°C maximum temperature difference was not in the predetermined range, firing defects such as crack and the like may generate and the product yield may be low when there vary conditions such as the structure of formed material (e.g. apparent volume, partition wall thickness and cell density), the material constituting the formed material (e.g. kind of raw material for aggregate particles, and kind and amount of binder), and the concentration of oxygen during firing.

### Industrial Applicability

As described above, the method for firing of ceramic honeycomb structure according to the present invention can prevent firing defects such as crack and the like effectively and can give a firing time which is significantly shorter than the conventional firing time; therefore, the method can be suitably used for production of a ceramic honeycomb structure of low pressure loss and high porosity which is useful as a dust-collecting filter, particularly as a diesel particulate filter.

## Claims

1. A method for firing of ceramic honeycomb structure, which comprises mixing and kneading at least a raw material to become cordierite and water to form a puddle, forming the puddle into a honeycomb shape having a plurality of cells (to become passages for fluid) divided by partition walls, drying the honeycomb shape to obtain a formed honeycomb material having an apparent volume of 5 liters or more, and firing the formed honeycomb material in a firing atmosphere which is heated at a given temperature elevation rate to obtain a ceramic honeycomb structure,
wherein, in the firing of the formed honeycomb material in the firing atmosphere, the heating of the firing atmosphere from 800°C to 1,000°C is conducted at a temperature elevation rate of +40 (°C/hr) or less.

2. A method for firing of ceramic honeycomb structure according to Claim 1, wherein, when the formed honeycomb material obtained has a partition wall thickness of 90 µm or more, the heating of the firing atmosphere from 800°C to 1,000°C in the firing of the formed honeycomb material is conducted at such a temperature elevation rate that the difference of the temperature of the central portion of the formed honeycomb material from the temperature of the firing atmosphere is kept in a range of -60°C to +60°C.

3. A method for firing of ceramic honeycomb structure according to Claim 1, wherein, when the formed honeycomb material obtained has a partition wall thickness of less than 90 µm, the heating of the firing atmosphere from 800°C to 1,000°C in the firing of the formed honeycomb material is conducted at such a temperature elevation rate that, the difference of the temperature of the central portion of the formed honeycomb material from the temperature of the firing atmosphere is kept in a range of -40°C to +40°C.

## Patentansprüche

1. Verfahren zum Brennen einer keramischen Wabenstruktur, das Folgendes umfasst:
Mischen und Kneten von zumindest einem Rohmaterial, das zu Cordierit werden soll, und Wasser, um eine Schlämme zu bilden; Ausbilden der Schlämme zu einer Wabenform mit einer Vielzahl von durch Trennwände getrennter Zellen (die Fluiddurchlässe werden sollen); Trocknen der Wabenform, um ein geformtes Wabenmaterial mit einem scheinbaren Volumen von 5 Litern oder mehr aufzuweisen; und Brennen des geformten Wabenmaterials in einer Brennumgebung, die bei einer gegebenen Temperaturanstiegsrate erhitzt wird, um eine keramische Wabenstruktur zu erhalten,
worin beim Brennen des geformten Wabenmaterials in der Brennumgebung das Erhitzen der Brennumgebung von 800 °C auf 1.000 °C bei einer Temperaturanstiegsrate von + 40 (°C/hr) oder weniger durchgeführt wird.

2. Verfahren zum Brennen einer keramischen Wabenstruktur nach Anspruch 1, worin, wenn das erhaltene geformte Wabenmaterial eine Trennwanddicke von 90 µm oder mehr aufweist, das Erhitzen der Brennatmosphäre von 800 °C auf 1.000 °C beim Brennen des geformten Wabenmaterials bei einer solchen Temperaturanstiegsrate durchgeführt wird, dass die Differenz zwischen der Temperatur des Mittelabschnitts des geformten Wabenmaterials und der Temperatur der Brennumgebung in einem Bereich von -60 °C bis + 60 °C gehalten wird.

3. Verfahren zum Brennen von keramischen Wabenstrukturen nach Anspruch 1, worin, wenn das erhaltene geformte Wabenmaterial eine Trennwanddicke von weniger als 90 µm aufweist, das Erhitzen der Brennatmosphäre von 800 °C auf 1.000 °C beim Brennen des geformten Wabenmaterials bei einer solchen Temperaturanstiegsrate durchgeführt wird, dass die Differenz zwischen der Temperatur des Mittelabschnitts des geformten Wabenmaterials und der Temperatur der Brennumgebung in einem Bereich von -40 °C bis + 40 °C gehalten wird.

## Revendications

1. Procédé de cuisson d'une structure en nid d'abeille de céramique, qui comprend les étapes consistant à mélanger et à pétrir au moins une matière première destinée à devenir de la cordiérite et de l'eau afin de former un puddler, former le puddler en une forme de nid d'abeille ayant une pluralité d'alvéoles (destinées à devenir des passages pour le fluide) divisées par des parois de séparation, sécher la forme de nid d'abeille afin d'obtenir un matériau en nid d'abeille formé ayant un volume apparent de 5 litres ou plus, et faire cuire le matériau en nid d'abeille formé dans une atmosphère de cuisson qui est chauffée à un taux de montée en température donné pour obtenir une structure en nid d'abeille de céramique,
dans lequel, lors de l'étape de cuisson du matériau de nid d'abeille formé dans l'atmosphère de cuisson, le chauffage de l'atmosphère de cuisson de 800°C à 1000°C est réalisé à un taux de montée en température de +40 (°C/h) ou moins.

2. Procédé de cuisson d'une structure en nid d'abeille de céramique selon la revendication 1, dans lequel, lorsque le matériau en nid d'abeille formé obtenu a une épaisseur de paroi de séparation de 90 µm ou plus, le chauffage de l'atmosphère de cuisson de 800°C à 1000°C lors de l'étape de cuisson du matériau en nid d'abeille formé est réalisé à un taux de montée en température tel que la différence de la température de la partie centrale du matériau en nid d'abeille formé par rapport à la température de l'atmosphère de cuisson est maintenue dans une plage de - 60°C à + 60°C.

3. Procédé de cuisson d'une structure en nid d'abeille de céramique selon la revendication 1, dans lequel, lorsque le matériau en nid d'abeille formé obtenu a une épaisseur de paroi de séparation inférieure à 90 µm, le chauffage de l'atmosphère de cuisson de 800°C à 1000°C lors de l'étape de cuisson du matériau en nid d'abeille formé est réalisé à un taux de montée en température tel que la différence de la température de la partie centrale du matériau en nid d'abeille formé par rapport à la température de l'atmosphère de cuisson est maintenue dans une plage de - 40°C à + 40°C.
